# EUROPÄISCHE PATENTSCHRIFT

(11) **EP 0 713 003 B1**
(45) Veröffentlichungstag und Bekanntmachung des Hinweises auf die Patenterteilung: **22.03.2000**
(21) Anmeldenummer: 94810653.9
(22) Anmeldetag: 17.11.1994
(51) Int. Cl.: F02M 61/18, F02B 23/02

(54) **Verfahren und Vorrichtung zum Einspritzen von Brennstoff in einen Zylinder einer Dieselbrennkraftmaschinen**
Method and apparatus for injecting fuel in the cylinder of a diesel combustion engine
Méthode et appareil d'injection de combustible dans un cylindre d'un moteur diesel

(43) Veröffentlichungstag der Anmeldung: 22.05.1996
(73) Patentinhaber: Wärtsilä NSD Schweiz AG, 8401 Winterthur (CH)
(72) Erfinder: Schütz, Mathias, CH-8037 Zürich (CH)
(74) Vertreter: Heubeck, Bernhard

(56) Entgegenhaltungen:
- EP-A- 0 586 775
- DE-A- 2 837 606
- GB-A- 462 031
- PATENT ABSTRACTS OF JAPAN vol. 10, no. 37 (M-453) 14. Februar 1986 & JP-A-60 190 618 (MITSUBISHI) 28. September 1985
- PATENT ABSTRACTS OF JAPAN vol. 15, no. 93 (M-1089) 6. März 1991 & JP-A-02 308 965 (ISUZU CERAMICS) 21. Dezember 1990

## Beschreibung

Die Erfindung betrifft ein Verfahren zum Einspritzen von Brennstoff in einen Zylinder einer Dieselkraftmaschine gemäss dem Oberbegriff von Anspruch 1. Die Erfindung betrifft weiter eine Vorrichtung zum Einspritzen von Brennstoff in einen Zylinder einer Dieselbrennkraftmaschine gemäss dem Oberbegriff von Anspruch 5 (wie aus der DE-A-2837606 bekannt).

Aus der EP 0 586 775 A1 ist ein Verfahren sowie eine Anordnung zum Brennstoffeinspritzen bei Dieselbrennkraftmaschinen bekannt. Eine Dieselbrennkraftmaschine, und somit auch die vorhin genannte, weist während dem Betrieb eine beträchtliche Emission von Stickoxiden (NOx) auf.

Ein Grund für diese Emission liegt in der hohen Verbrennungstemperatur, die bewirken, dass ein Teil des in der Verbrennungsluft enthaltenen Stickstoffes während dem Verbrennen zu Stickoxid (NOx) aufoxidiert wird. Ein weiterer Grund für die Emission von Stickoxiden liegt darin, dass Dieselbrennkraftmaschinen, insbesondere Grossdieselmotoren, während dem Betrieb eine tiefe Drehzahl aufweisen, was die Bildung von Stickoxiden fördert, da dem Prozess zur NOx-Bildung genügend Zeit zur Verfügung steht, um tatsächlich abzulaufen.

Es ist die Aufgabe der vorliegenden Erfindung, ein Verfahren sowie eine Vorrichtung zur Reduktion der NOx-Bildung bei Dieselbrennkraftmaschinen zu schaffen, um die aus dem Verbrennungsprozess resultierende Emission von Stickoxiden (NOx) niedrig zu halten.

Diese Aufgabe wird erfindungsgemäss gelöst durch das Verfahren mit den in Anspruch 1 definierten Merkmalen. Die Unteransprüche 2 bis 4 beziehen sich auf weitere, vorteilhafte Ausgestaltungen der Erfindung. Die Aufgabe wird weiter gelöst mit einer Anordnung der Einspritzdüse gemäss den in Anspruch 5 definierten Merkmalen.

Bei dem erfindungsgemässen Verfahren zum Einspritzen von Brennstoff in den Brennraum eines Zylinders einer Hubkolbenbrennkraftmaschine der Dieselbauart wird beim Aufwärtsbewegen des Hubkolbens im Brennraum eine Drallströmung der Verbrennungsluft ausbildet und der aus der Einspritzdüse austretende Brennstoffstrahl teilweise in Mitrichtung und teilweise in Gegenrichtung zur Drallströmung ausgerichtet eingespritzt, sodass der in Mitrichtung austretende Brennstoffstrahl von mit Rauchgas vermischter Verbrennungsluft durchdrungen wird, welches Rauchgas durch den in Gegenrichtung ausgetretenen, verbrannten Brennstoffstrahls erzeugt wird.

Das erfindungsgemässe Verfahren weist den Vorteil auf, dass die Verbrennung auf Grund des als Inertgas wirkenden Rauchgases zeitlich langsamer abläuft, was die Verbrennungstemperatur reduziert. Ein weiterer Vorteil ist darin zu sehen, dass das Rauchgas als Intergas Wärme aufnimmt, sodass die Verbrennungstemperatur des mit Rauchgas durchdrungenen Brennstoffstrahles reduziert wird. Ein weiterer Vorteil ist darin zu sehen, dass der in Gegenrichtung austretende Brennstoffstrahl zusammen mit der Verbrennungsluft eine sehr gute Durchmischung erfährt, was eine vorteilhafte Gemischbildung von Brennstoff, Luft und Rauchgas bewirkt. Diese genannten Effekte bewirken eine Reduktion der Verbrennungstemperatur und somit eine geringere Ausbildung von Nox. Diese Effekte treten insbesondere bei langsamlaufenden Dieselbrennkraftmaschinen auf, bei denen die Verbrennung des Brennstoffes kurz nach Einspritzbeginn stattfindet. Somit ist nahezu während der gesamten Zeit der Einspritzung und Gemischbildung Rauchgas vorhanden.

Ein Einspritzen von Brennstoff in Gegenrichtung zur Drallströmung wurde von Fachleuten bisher nicht verfolgt, weil bekannt war, dass ein solches Einspritzen den Wirkungsgrad der Dieselbrennkraftmaschine reduziert. Das erfindungsgemässe Verfahren weist den Vorteil auf, dass die Ausbildung von NOx sehr stark reduziert wird, wogegen der Wirkungsgrad kaum oder nur unwesentlich verschlechtert wird.

Das erfindungsgemässe Verfahren weist den weiteren Vorteil auf, dass die Ausbildung von NOx abhängig ist vom Anteil Brennstoff, der in Gegenrichtung zur Drallströmung eingespritzt wird. Je mehr Brennstoff in Gegenrichtung zur Drallströmung eingespritzt wird, um so mehr wird die Ausbildung von NOx reduziert. Somit sich Einspritzdüsen herstellbar, die sich bezüglich der Ausbildung von NOx unterschieden.

Im folgenden wird die Erfindung an Hand von mehreren Ausführungsbeispielen dargestellt. Es zeigen:
- Fig. 1: schematisch einen Längsschnitt durch einen Zylinder mit Einspritzdüsen zum Durchführen des erfindungsgemässen Verfahrens;
- Fig. 1a: eine nicht erfindungsgemäße Ansicht der Anordnung der Einspritzdüsen, vom Brennraum her gesehen;
- Fig. 1b: eine weitere, erfindungsgemäße Ansicht der Anordnung der Einspritzdüsen vom Brennraum her gesehen;
- Fig. 1c: eine Ansicht einer Einspritzdüse im Brennraum während dem Verbrennungsprozess des Brennstoffes;
- Fig. 1d: eine Ansicht der Durchtriffsöffnungen einer Einspritzdüse;
- Fig. 2: ein Diagramm der Ausbildung von NOx sowie des Wirkungsgrades in Funktion der in Gegenrichtung zur Drallströmung eingespritzen Brennstoffmenge.

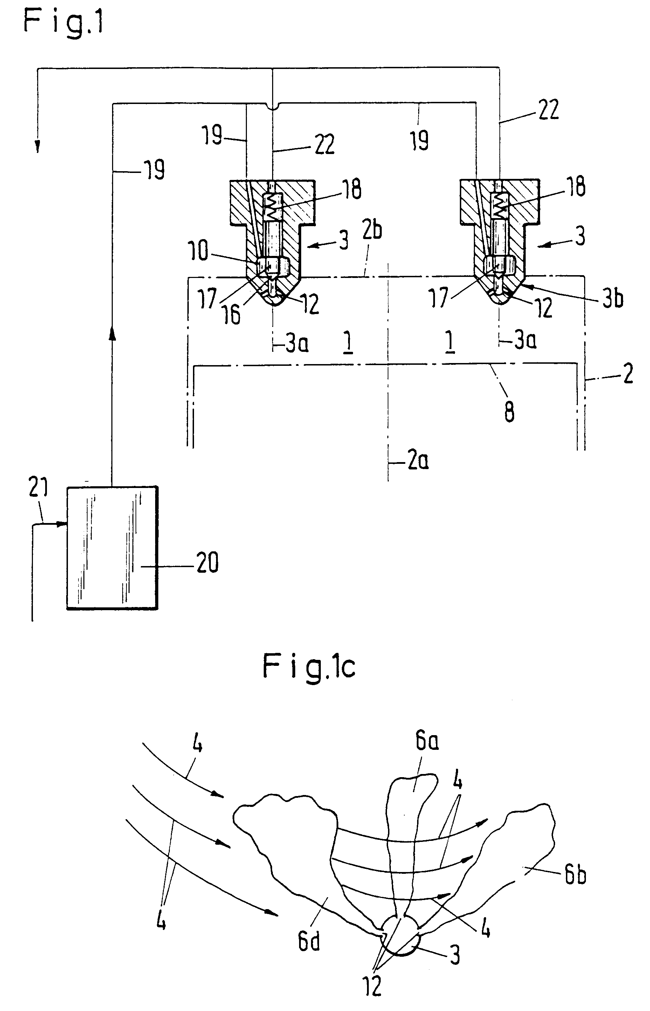

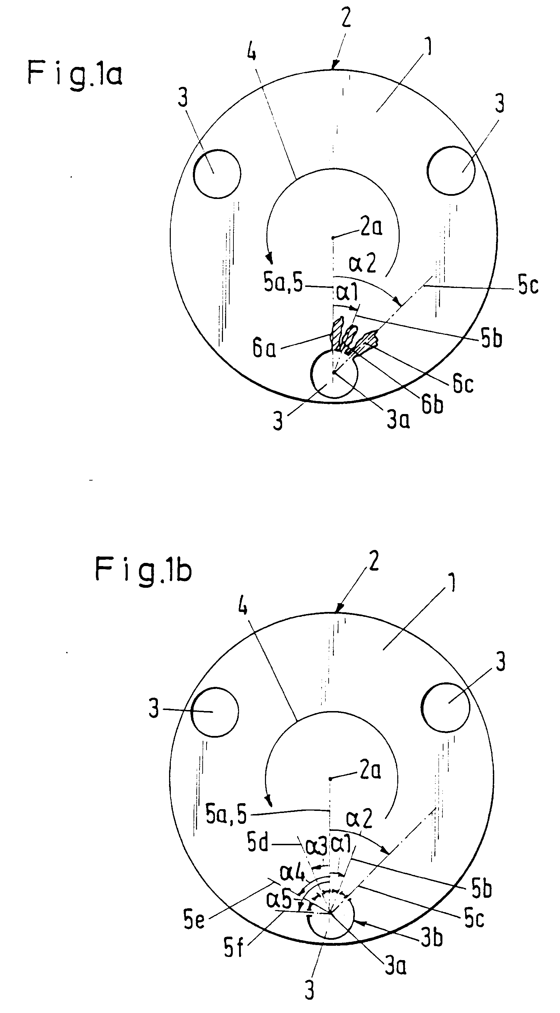

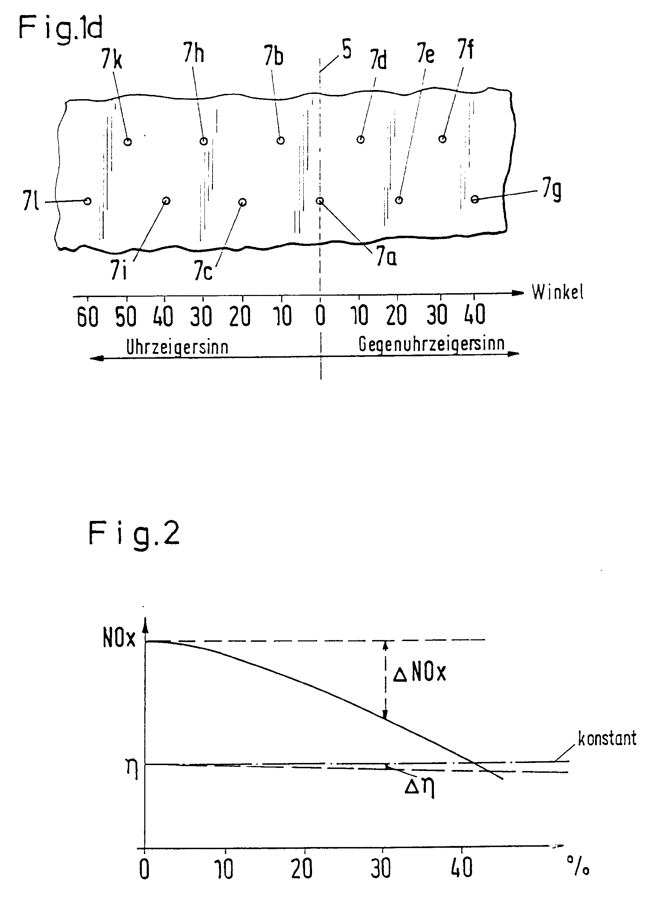

Von einer nicht näher dargestellten mehrzylindrigen, langsamlaufenden 2-Takt-Hubkolbenbrennkraftmaschine, die nach dem Diesel-Verfahren arbeitet, ist in Fig. 1 ein Zylinder 2 angedeutet, in dem ein Arbeitskolben 8 auf- und abbeweglich geführt ist. Der Arbeitskolben 8 begrenzt zusammen mit einem auf dem Zylinder 2 aufgesetzten Zylinderdeckel 2b einen Brennraum 1, in den mittels Einspritzdüsen 13 flüssiger Brennstoff, nämlich Dieselöl oder Schweröl, in einer nachfolgend beschriebenen Weise eingespritzt wird. Im Zentrum des Zylinderdeckels 2b ist ein nicht dargestelltes Auslassventil angeordnet, so dass im Zylinder 2 zu Beginn der Aufwärtsbewegung des Arbeitskolbens 8 eine Längsspülung auftritt. Die Zylinderwand 2 weist nicht dargestellte Eintrittsschlitze auf, durch welche die Verbrennungsluft in den Innenraum der Verbrennungskammer 1 eintritt, wobei die Eintrittsschlitze derart ausgestaltet und ausgerichtet sind, dass sie auf die eintretende Verbrennungsluft einen Drall erzeugen, der sich innerhalb der Verbrennungkammer 1 ausbildet.
Die Einspritzdüse 13 weist eine Düsennadel 17 auf, die unter der Wirkung einer Schliessfeder 18 gegen eine Sitzfläche 16 gedrückt wird. Unterhalb der Sitzfläche 16 ist ein Sackloch vorgesehen, von dem Spritzlöcher 12 ausgehen, die in den Brennraum 1 münden. Oberhalb der Sitzfläche 16 ist im Düsengehäuse eine Druckkammer 10 vorgesehen, die über eine Druckleitung 19 mit einer Einspritzpumpe 20 verbunden ist, der über eine Leitung 21 Brennstoff aus einem nicht dargestellten Reservoir zugeführt wird. Während der Einspritzphase der Einspritzdüse 18 ist der Druck des über die Leitung 19 der Druckkammer 10 zugeführten Brennstoffs so gross, dass die Schliesskraft der Feder 18 überwunden wird und die Düsennadel 17 von der Sitzfläche 16 abhebt, so dass der Brennstoff über die Spritzlöcher 12 in den Brennraum 1 gelangt. Am Gehäuse der Einspritzdüse 13 ist eine Leitung 22 angeschlossen, die zum Abführen von Leckbrennstoff dient. Der Zylinder 2 weist eine achsial zum Zylinder verlaufende Mittellinie 2a auf, die durch das Zentrum des Zylinderdeckels 2b verläuft. Die Einspritzdüse 18 weist eine achsial zur und im Zentrum der Einspritzdüse 18 verlaufende Mittellinie 3a auf.

Fig. 1a zeigt aus einer Ansicht vom Brennraum 1 her eine Anordnung von drei Einspritzdüsen 3, die im Zylinderdeckel 2b angeordnet sind. Aus den nur schematisch dargestellten Spritzlöchern 12 der Einspritzdüse 3 wird der Brennstoff in Form von strahlförmigen Gebilden 6a, 6b, 6c in den Brennraum 1 gespritzt, wobei die Austrittsrichtung 5a, 5b, 5c des Brennstoffs aus den Spritzlöchern 12 dargestellt ist. Das Einspritzen des Brennstoffes ist nur an einer der Einspritzdüsen 3 beispielhaft dargestellt. Es wird jedoch von jeder Einspritzdüse Brennstoff eingespritzt, vorteilhafterweise derart, dass drei identische Einspritzdüsen verwendet werden, die im Brennraum 1 gleich wirkend angeordnet sind, sodass sich für jede Einspritzdüse 3 ähnlich ausgebildete, strahlförmige Gebilde 6a, 6b, 6c ergeben.

Durch den Stellwinkel der Eintrittsschlitze in der Wandung des Zylinders 2 wird auf die in den Verbrennungsraum 1 eintretende Verbrennungsluft eine Drallströmung erzeugt. Während der Aufwärtbewegung des Arbeitskolbens 8 wird die Drallströmung 4 der Verbrennungsluft weiter beeinflusst, wobei die Verlaufsrichtung der Drallströmung 4 in Fig. 1a mit einem Pfeil dargestellt ist. Die strahlförmigen Gebilden 6a, 6b, 6c im Brennraum 1 erfahren durch die Drallströmung 4 üblicherweise eine Abweichung zur Austrittsrichtung 5a, 5b, 5c des Brennstoffs aus den Spritzlöchern 12.

Aus Fig. 1a ebenfalls ersichtlich ist die senkrecht zur Beobachtungsrichtung verlaufende Mittellinie 2a des Zylinders 2 sowie die Mittellinie 3a der Einspritzdüse 18. Eine senkrecht durch die Mittellinie 2a und die Mittellinie 3a verlaufende Referenzlinie 5 definiert eine Gerade, bezüglich welcher der Winkel der Austrittsrichtungen 5a, 5b, 5c definiert wird. Die Austrittsrichtung 5a weist einen Winkel von 0 Grad auf, die Austrittsrichtungen 5b und 5c einen Winkel von α1 beziehungsweise α2, wobei sich die Winkel in der dargestellten Ansicht in Richtung des Uhrzeigensinns vergrössern. Die Austrittsrichtungen 5b und 5c werden als in Mitrichtung zur Drallströmung 4 verlaufend bezeichnet, wogegen die Austrittsrichtung 5a als senkrecht zur Drallströmung 4 verlaufend bezeichnet wird.

In Fig. 1b sind die Einspritzdüsen 3 in derselben Weise im Brennraum 1 angeordnet wie in Fig. 1a. Die in Fig. 1b dargestellte Einspritzdüse 3 weist jedoch zusätzliche Spritzlöcher 12 auf, deren Austrittsrichtung 5d, 5e, 5f unter einem Winkel von α3, α4 beziehungsweise α5 verlaufen, wobei sich diese Winkel in der dargestellten Ansicht bezüglich der Referenzlinie 5 in Richtung des Gegenuhrzeigersinns vergrössern. Diese Austrittsrichtungen 5d, 5e und 5f werden in der vorliegenden Schrift als in Gegenrichtung zur Drallströmung 4 verlaufend bezeichnet.

Fig. 1c zeigt einen Schnitt durch die Einspritzdüse 3, aus deren Spritzlöcher 12 Brennstoff in den Brennraum 1 gespritzt wird. Die austretenden Brennstoffstrahlen 6a, 6b, 6d sind strahlförmige Gebilde die verbrennen, und somit teilweise aus Brennstoff und teilweise aus Verbrennungsprodukten wie Rauchgas bestehen. Die Ausbildung der strahlförmigen Gebilde 6a, 6b, 6c wird stark beeinflusst durch die Drallströmung 4. Der in Gegenrichtung zur Drallströmung eingespritzte Brennstoffstrahl 6d erzeugt Rauchgas, das sich mit der weiter zugeführten Luft intensiv vermischt, und das auf Grund der Drallströmung 4 in die strahlförmigen Gebilde 6a und 6b gelangt, sodass während der Gemischbildung und Verbrennung der Brennstoffstrahlen 6a, 6b weniger Sauerstoff vorhanden ist. Das Rauchgas bewirkt, dass die Verbrennung zeitlich langsamer abläuft, was die Verbrennungstemperatur im Brennstoffstrahl 6a, 6b reduziert. Das Rauchgas nimmt zudem Wärme auf, sodass die Verbrennungstemperatur des mit Rauchgas durchdrungenen Brennstoffstrahls zusätzlich reduziert wird. Die dadurch erzielte tiefere Verbrennungstemperatur des Brennstoffstrahls 6a, 6b bewirkt eine geringere Ausbildung von NOx. Natürlich wird der in Mitrichtung zur Drallströmung 4 austretende Brennstoffstrhal 6b auch durch den ungefähr senkrecht zur Drallströmung austretenden Brennstoffstrahl 6a beeinflusst, da auch von diesem Brennstoffstrahl 6a erzeugtes Rauchgas durch die Drallströmung 4 zum Brennstoffstrahl 6b gefördert wird, doch ist die Wirkung wesentlich kleiner, da nur eine ungenügende, relativ geringe Durchmischung von Rauchgas mit frischer Verbrennungsluft erreicht wird.

Das erfindungsgemässe Verfahren basiert darauf, dass mindestens ein aus der Einspritzdüse 3 austretender Brennstoffstrahl 6b in Mitrichtung zur Drallströmung 4 eingespritzt wird, dass mindestens ein weiterer aus derselben Einspritzdüse 3 austretender Brennstoffstrahl (6a, 6d) in Gegenrichtung zur Drallströmung 4 eingespritzt wird, und dass auf Grund der Drallströmung 4 Rauchgas aus dem verbrennenden oder verbrannten Brennstoffstrahl 6a, 6d in die bezüglich der Richtung der Drallströmung 4 nachgelagerten Brennstoffstrahlen 6a und/oder 6b gefördert wird, sodass das Rauchgas den Verbrennungsprozess in nachgelagerten Brennstoffstrahl 6a und/oder 6b beeinflusst.

Eine Einspritzdüse 3 kann in einer Vielzahl von Möglichkeiten ausgestaltet sein, um das vorhin beschriebene Verfahren zu bewirken. Inbesondere lassen sich die Spritzlöcher 12 in einer Vielzahl von Möglichkeiten in der Einspritzdüse 3 anordnen, um diesen Effekt zu erzielen, ebenso lässt sich die Einspritzdüse 3 in einer Vielzahl von Möglichkeiten am Zylinderdeckel 2b anordnen, damit ein Teil des Brennstoffes in Gegenrichtung zur Drallströmung 4 eingespritzt wird. Das in Fig. 1d dargestellte Ausführungsbeispiel einer Anordnung von Austrittsöffnungen 7a-7l in der Wandung 3b einer Einspritzdüse 3 ist nur als ein Beispiel aus einer Vielzahl von möglichen Ausführungsbeispielen zu sehen.

Die Wandung 3b ist Bestandteil des sich innerhalb des Brennraum 1 befindlichen Teils der Einspritzdüse 3. Diese Wandung 3b kann zum Beispiel zylinderförmig oder kegelförmig ausgebildet sein, wobei in Fig. 1d eine Aussenansicht der Abwicklung der Wandung 3b dargestellt ist. Die Referenzlinie 5 definiert den Nullpunkt des Winkels und verläuft durch die Austrittsöffnung 7a. Die Austrittsöffnungen 7b, 7c, 7h-7l sind in Abstanden von je 10 Winkelgraden angeordnet, wobei der Winkel α in Richtung des Uhrzeigersinnes zunimmt. Die Austrittsöffnungen 7d, 7e, 7f, 7g sind ebenfalls um je 10 Winkelgrade beabstandet, wobei der Winkel α in Richtung des Gegenuhrzeigersinnes zunimmt. In Fig. 1b entspricht die Austrittsrichtung 5a der Austrittsöffnung 7a, durch welche die Referenzlinie 5 verläuft. Die Austrittsöffnungen 7b und 7c entsprchen den Austrittsrichtungen 5b, 5c und weisen bezüglich der Referenzlinie 5 Winkel im Uhrzeigersinn von α1 beziehungsweise α2 auf. Die Austrittsöffnungen 7d, 7e, 7f entsprechen den Austrittsrichtungen 5d, 5e, 5f und weisen bezüglich der Referenzlinie 5 Winkel im Gegenuhrzeigersinn von α3, α4 und α5 auf. Die Form und Ausrichtung der strahlförmigen Gebilde 6a, 6b, 6c, 6d lässt sich zum Beispiel beeinflussen durch die Anordnung der Austrittsöffnungen 7a-7l, durch die Ausrichtung sowie den Querschnitt der Spritzlöcher 12, oder durch den Druck des in die Einspritzdüse 3 gelieferten Brennstoffes. Somit ergibt sich eine Vielzahl von Ausführungsformen einer Einspritzdüse 3, die alle den erfindungsgemässen Effekt aufweisen.

In einer vorteilhaften Ausführungsform weisen die in Richtung des Gegenuhrzeitersinnes angeordneten Durchtrittsöffnungen 7d, 7e, 7f, 7g beziehungsweise deren Austrittsrichtung 5d, 5e, 5f einen Winkel zur Referenzlinie 5 von mindestens 20 Grad auf. In einer weiteren vorteilhaften Ausführungsform sind die Durchtrittsöffnungen 7d, 7e, 7f, 7g in einem Winkel zur Referenzlinie 5 von mindestens 20 Grad und höchstens 100 Grad liegen. In einer weiteren vorteilhaften Ausführungsform sind die Durchtrittsöffnungen 7d, 7e, 7f, 7g derart ausgestaltet, dass mindestens 10% der aus der Einspritzdüse 3 austretenden Brennstoffmenge durch diese, in Gegenrichtung zur Drallströmung 4 ausgerichteten Durchtrittsöffnungen 7d, 7e, 7f, 7g eingespritzt wird.

In Fig. 2 ist ein Zusammenhang zwischen der in Gegenrichtung zur Drallströmung 4 eingespritze Brennstoffmenge sowie die Erzeugung von NOx beziehungsweise des Wirkungsgrades η dargestellt. Mit zunehmender Brennstoffmenge, eingespritzt in Gegenrichtung zur Drallströmung 4, reduziert sich die Ausbildung von NOx während der Verbrennung. So hat zum Beispiel das Einspritzen von 30% des Brennstoffes in Gegenrichtung zur Drallströmung 4 zur Folge, dass die Reduktion der Ausbildung von NOx um eine beträchtliche Veränderung ΔNOx ausfällt, wogegen sich der Wirkungsgrad η nur um den geringen Betrag Δη verringert.

Es kann sich als vorteilhaft erweisen, die in Gegenrichtung zur Drallströmung 4 austretende Brennstoffmenge mit einem ansteuerbaren Mittel zu beeinflussen, sodass die austretende Brennstoffmenge steuerbar ist, oder in Verbindung mit einem Sensor, zum Beispiel einem Sensor für Nox sowie einer Regelvorrichtung regelbar ist. Ein derartiges ansteuerbares Mittel kann zum Beispiel in der Einspritzdüse 3 selbst angeordnet sein, zum Beispiel als Schieber, der teilweise die Durchtrittsöffnungen 7d, 7e, 7f, 7g abdeckt, gekoppelt mit einer mechanischen Antriebsvorrichtung. Das ansteuerbare Mittel kann auch derart ausgestaltet sein, dass es als mechanisches Antriebsmittel ausgestaltet ist, das die Lage beziehungsweise die Anordnung der Einspritzdüse im Brennraum zum Beispiel durch Drehen der Einspritzdüsen derart verändert, dass der in Gegenrichtung zur Drallströmung (4) ausgerichtete Anteil der Brennstoffmenge verändert wird.

## Patentansprüche

1. Verfahren zum Einspritzen von Brennstoff in den Brennraum (1) eines Zylinders (2) einer Hubkolbenbrennkraftmaschine der Dieselbauart, wobei die gesamte, für einen Arbeitstakt bestimmte Brennstoffmenge mit Einspritzdüsen (3) eingespritzt wird, und wobei Verbrennungsluft derart in den Zylinder (2) eingebracht wird, dass sich beim Einbringen eine Drallströmung (4) der Verbrennungsluft ausbildet, wobei ferner mindestens ein aus der Einspritzdüse (3) austretender Brennstoffstrahl (6b, 6c) in Mitrichtung zur Drallströmung (4) eingespritzt wird, und mindestens ein aus der Einspritzdüse (3) austretender Brennstoffstrahl (6d) in Gegenrichtung zur Drallströmung (4) ausgerichtet eingespritzt wird, dadurch gekennzeichnet, dass der in Mitrichtung und der in Gegenrichtung austretende Brennstoffstrahl (6b,6c und 6d) während derselben Zeitspanne und derart eingespritzt werden, dass der in Mitrichtung austretende Brennstoffstrahl (6b, 6c) von dem Rauchgas des in Gegenrichtung ausgetretenen, verbrannten Brennstoffstrahls (6d) durchdrungen wird.

2. Verfahren nach Anspruch 1, dadurch gekennzeichnet, dass eine senkrecht durch eine Mittellinie (2a) des Zylinders (2) und eine Mittellinie (3a) der Einspritzdüse (3) verlaufende Referenzlinie (5) definiert wird, und dass der in Gegenrichtung zur Drallströmung (4) eingespritzte mindestens eine Brennstoffstrahl (6d) unter einem Winkel zwischen einer Austrittsrichtung (5d, 5e, 5f) des Brennstoffstrahls und der Referezlinie (5) von mindestens 20 Grad eingespritzt wird.

3. Verfahren nach einem der Ansprüche 1 oder 2, dadurch gekennzeichnet, dass mindestens 10% der aus der Einspritzdüse (3) austretenden Brennstoffmenge durch mindestens einen in Gegenrichtung zur Drallströmung (4) ausgerichteten Brennstoffstrahl (6d) eingespritzt wird.

4. Verfahren nach einem der Ansprüche 1 bis 3, dadurch gekennzeichnet, dass die Brennstoffmenge des in Gegenrichtung zur Drallströmung (4) ausgerichteten Brennstoffstrahls (6d) durch ein Ansteuermittel beeinflusst wird.

5. Anordnung einer Einspritzdüse (3) mit Austrittsöffnungen (12;7a-7l) in einem Brennraum (1) eines Zylinders (2) einer Hubkolbenbrennkraftmaschine der Dieselbauart, bei welcher Verbrennungsluft derart in den Zylinder eingebracht wird, dass sich beim Einbringen eine Drallströmung (4) der Verbrennungsluft ausbildet, wobei die Einspritzdüse (3) so angeordnet ist, dass mindestens durch eine erste Austrittsöffnung (12;7b,7c,7h-7l) ein Brennstoffstrahl (6b, 6c) in Mitrichtung zur Drallströmung (4) eingespritzt wird, und durch mindestens eine zweite Austrittsöffnung (12;7d,7e,7f,7g) ein Brennstoffstrahl (6d) in Gegenrichtung zur Drallströmung (4) ausgerichtet eingespritzt wird, dadurch gekennzeichnet, dass die Austrittsöffnungen (12;7a-7l) derart angeordnet und ausgerichtet sind, dass die erste und die zweite Austrittsöffnung während derselben Zeitspanne geöffnet sind, und dass der in Mitrichtung austretende Brennstoffstrahl (6b, 6c) von dem Rauchgas des in Gegenrichtung ausgetretenen, verbrannten Brennstoffstrahls (6d) durchdrungen wird.

6. Anordnung nach Anspruch 5, bei welcher die Austrittsöffnungen (12,7a-7l) der Einspritzdüse (3) derart ausgestaltet sind, dass mindestens 10% der Brennstoffmenge durch die zweiten Austrittsöffnungen (12;7d,7e,7f) austritt, von denen der Brennstoffstrahl in Gegenrichtung zur Drallströmung (4) ausgerichtet eingespritzt wird.

7. Anordnung nach einem der Ansprüche 5 oder 6, wobei der Winkel (α3, α4, α5), den die zweiten Austrittsöffnungen (7d, 7e, 7f), von denen der Brennstoffstrahl in Gegenrichtung zur Drallströmung (4) ausgerichtet eingespritzt wird, mit einer Referenzlinie (5) bilden, die radial zur Mittellinie (3a) der Einspritzdüse (3) und senkrecht zur Drallströmung (4) verläuft, in einem Bereich zwischen 20 Grad und 100 Grad liegt.

8. Anordnung nach einem der Ansprüche 5 bis 7, dadurch gekennzeichnet, dass ein Ansteuermittel vorgesehen ist, um die Brennstoffmenge des mindestens einen in Gegenrichtung zur Drallströmung (4) ausgerichteten Brennstoffstrahls (6d) zu beeinflussen.

9. Dieselbrennkraftmaschine betrieben mit einem Verfahren nach einem der Ansprüche 1 bis 4, oder aufweisend eine Anordnung nach einem der Ansprüche 5-8.

## Claims

1. Method for injecting fuel into the combustion chamber (1) of a cylinder (2) of a reciprocating piston combustion engine of the Diesel type, wherein the entire amount of fuel intended for a working cycle is injected by injection nozzles (3) and wherein combustion air is introduced into the cylinder (2) such that a swirling flow (4) of the combustion air forms, wherein, furthermore, at least one fuel jet (6b, 6c) issuing from the injection nozzle (3) is injected in co-direction to the swirling flow (4) and at least one fuel jet (6d) issuing from the injection nozzle (3) is injected in an orientation opposite to the swirling flow (4), characterized in that the fuel jet (6b, 6c and 6d) issuing in the co-direction and in the opposite direction are injected during the same time interval and such that the fuel jet (6b, 6c) issuing in the co-direction is penetrated by the smoke gas of the burned fuel jet (6d) issuing in the opposite direction.

2. Method in accordance with claim 1, characterized in that a reference line (5) is defined which extends perpendicularly through a centre line (2a) of the cylinder (2) and a centre line (3a) of the injection nozzle (3) and in that the at least one fuel jet (6d) injected in the opposite direction to the swirling flow (4) is injected in at an angle between the outlet direction (5d, 5e, 5f) of the fuel jet and the reference line (5) of at least 20 degrees.

3. Method in accordance with one of the claims 1 or 2, characterized in that at least 10 % of the amount of fuel issuing from the injection nozzle (3) is injected by at least one fuel jet (6d) aligned in the opposite direction to the swirling flow (4).

4. Method in accordance with one of the claims 1 to 3, characterized in that the amount of fuel of the fuel jet (6d) aligned in the opposite direction to the swirling flow (4) is influenced by a control means.

5. Arrangement of an injection nozzle (3) with outlet openings (12, 7a-7l) in a combustion chamber (1) of a cylinder (2) of a reciprocating piston combustion engine of the Diesel type in which combustion air is introduced into the cylinder such that a swirling flow (4) of the combustion air forms during the introduction, with the injection nozzle (3) being so arranged that a fuel jet (6b, 6c) is introduced at least through a first outlet opening (12; 7b, 7c, 7h-7l) in co-direction to the swirling flow and a fuel jet (6d) is injected through at least one second outlet opening aligned in the opposite direction to the swirling flow, characterized in that the outlet openings (12; 7a-7l) are so arranged and aligned that the first and the second outlet openings are open during the same time interval and in that the fuel jet (6b, 6c) issuing in the co-direction is penetrated by the smoke gas of the burned fuel jet (6d) issuing in the opposite direction.

6. Arrangement in accordance with claim 5, in which the outlet openings (12; 7a-7l) of the injection nozzle (3) are so designed that at least 10 % of the fuel quantity issues through the second outlet openings (12; 7d, 7e, 7f), from which the fuel jet is injected aligned in the opposite direction to the swirling flow (4).

7. Arrangement in accordance with one of the claims 5 or 6, wherein the angle (α3, α4, α5), which the second outlet openings (7d, 7e, 7f), from which the fuel jet is injected aligned in the opposite direction to the swirling flow (4), form with a reference line (5), which extends radially to the central line (3a) of the injection nozzle (3) perpendicular to the swirling flow (4), lies in a range between 20° and 100°.

8. Arrangement in accordance with one of the claims 5 to 7, characterized in that a control means is provided in order to influence the amount of fuel of the at least one fuel jet (6d) aligned in the opposite direction to the swirling flow (4).

9. Diesel combustion engine operated with a method in accordance with one of the claims 1 to 4, or having an arrangement in accordance with one of the claims 5 to 8.

## Revendications

1. Procédé d'injection de combustible dans l'enceinte de combustion (1) d'un cylindre (2) d'un moteur alternatif à combustion interne du type de construction diesel, où est injectée toute la quantité de combustible prévue pour une cadence de travail avec des buses d'injection (3), et où l'air de combustion est introduit de telle manière dans le cylindre (2) qu'il se forme lors de l'introduction un flux tourbillonnaire (4) de l'air de combustion, où est injecté en outre au moins un jet de combustible (6b, 6c) sortant de la buse d'injection (3) dans la même direction que le flux tourbillonnaire (4), et au moins un jet de combustible (6d) sortant de la buse d'injection (3) est injecté dans la direction contraire au flux tourbillonnaire (4), caractérisé en ce que les jets de combustible sortant dans la même direction et dans la direction contraire (6b, 6c et 6d) sont injectés pendant le même laps de temps et de façon que le jet de combustible (6b, 6c) sortant dans la même direction soit traversé par le gaz de fumée du jet de combustible brûlé (6d) sortant dans la direction contraire.

2. Procédé selon la revendication 1, caractérisé en ce qu'il est défini une ligne de référence (5) s'étendant perpendiculairement à travers une ligne médiane (2a) du cylindre (2) et une ligne médiane (3a) de la buse d'injection (3), et qu'au moins un jet de combustible (6d) injecté dans la direction contraire au flux tourbillonnaire (4) est injecté sous un angle entre une direction de sortie, (5d, 5e, 5f) du jet de combustible et la ligne de référence (5) d'au moins 20 degrés.

3. Procédé selon l'une des revendications 1 ou 2, caractérisé en ce qu'au moins 10 % de la quantité de combustible sortant de la buse d'injection (3) sont injectés par au moins un jet de combustible (6d) orienté dans la direction contraire au flux tourbillonnaire (4).

4. Procédé selon l'une des revendications 1 à 3, caractérisé en ce qu'on agit sur la quantité de combustible du jet de combustible (6d) orienté dans la direction contraire au flux tourbillonnaire (4) par un moyen de commande.

5. Agencement d'une buse d'injection (3) avec des ouvertures de sortie (12; 7a-7l) dans une enceinte de combustion (1) d'un cylindre (2) d'un moteur alternatif à combustion interne du type de construction diesel, où l'air de combustion est introduit dans le cylindre de façon qu'il se forme lors de l'introduction un flux tourbillonnaire (4) de l'air de combustion, où la buse d'injection (3) est disposée de telle manière qu'au moins à travers une première ouverture de sortie (12; 7b, 7c, 7h-7l), un jet de combustible (6b, 6c) est injecté dans le même sens que le flux tourbillonnaire (4), et qu'à travers au moins une deuxième ouverture de sortie (12; 7d, 7e, 7f, 7g), un jet de combustible (6d) est injecté dans la direction contraire au flux tourbillonnaire (4), caractérisé en ce que les ouvertures de sortie (12; 7a-7l) sont disposées et orientées de façon que les première et deuxième ouvertures de sortie soient ouvertes pendant le même laps de temps et que le jet de combustible (6b, 6c) sortant dans la même direction est traversé par le gaz de fumée du jet de combustible brûlé (6d) sortant dans la direction contraire.

6. Agencement selon la revendication 5, où les ouvertures de sortie (12, 7a-7l) de la buse d'injection (3) sont configurées de façon qu'au moins 10 % de la quantité de combustible sortent à travers les deuxièmes ouvertures de sortie (12; 7d, 7e, 7f) à partir desquelles le jet de combustible est injecté dans la direction contraire au flux tourbillonnaire (4).

7. Agencement selon l'une des revendications 5 ou 6, où l'angle (α3, α4, α5) que forment les deuxième ouvertures de sortie (7d, 7e, 7f), à partir desquelles le jet de combustible est injecté dans la direction contraire au flux tourbillonnaire (4), avec une ligne de référence (5) qui s'étend radialement à la ligne médiane (3a) de la buse d'injection (3) et perpendiculairement au flux tourbillonnaire (4) , se situe dans une plage comprise entre 20 degrés et 100 degrés.

8. Agencement selon l'une des revendication 5 à 7, caractérisé en ce qu'il est prévu un moyen de commande pour agir sur la quantité de combustible d'au moins un jet de combustible (6d) orienté dans la direction contraire au flux tourbillonnaire (4).

9. Moteur à combustion diesel fonctionnant selon un procédé selon l'une des revendications 1 à 4, ou présentant un agencement selon l'une des revendications 5-8.
